# NEUE EUROPÄISCHE PATENTSCHRIFT

(11) **EP 0 225 443 B2**
(45) Veröffentlichungstag und Bekanntmachung des Hinweises auf die Entscheidung über den Einspruch: **13.09.1995**
(45) Hinweis auf die Patenterteilung: 13.09.1989
(21) Anmeldenummer: 86112858.5
(22) Anmeldetag: 17.09.1986
(51) Int. Cl.: A61C 13/20, B23K 9/22

(54) **Punktschweissgerät für die Dentaltechnik**
Spot welding device for dentistry
Dispositif à souder par points pour l'art dentaire

(30) Priorität: 03.12.1985 DE 3542674
(43) Veröffentlichungstag der Anmeldung: 16.06.1987
(73) Patentinhaber: Dahlmann, Christian, D-58762 Altena (DE)
(72) Erfinder: Dahlmann, Christian, D-58762 Altena (DE)
(74) Vertreter: Hassler, Werner, Dr.

(56) Entgegenhaltungen:
- DE-A- 2 658 332
- DE-A- 2 827 020
- DE-A- 3 227 692
- DE-A- 3 327 882
- DE-B- 2 108 105
- FR-A- 1 555 494
- GB-A- 1 281 414
- US-A- 2 836 703
- Prospekt Impulsfixator IP-120,Scheu-Dental
- Bedienungsanleitung Impulsfixator IP-120, Scheu-Dental,4/91
- "Dental-labor", Heft 6/91, Seiten 788-790

## Beschreibung

Die Erfindung betrifft ein Punktschweißgerät für die Dentaltechnik, wobei an eine Niederspannungs-Gleichrichterschaltung eine Kondensatoranordnung angeschlossen ist, die einen Strom für einen Lichtbogen liefert.

In der Dentaltechnik müssen für Zahnprothesen, Gebißaufbauten und dergleichen zahlreiche Metallteile aus Edelmetallen, Edelstahl und dergleichen fest miteinander verbunden, insbesondere in ein Lötbett eingebettet werden. Dieses gilt auch für Stützdrähte und andere Haltevorrichtungen aus Draht. Es ist jedoch sehr schwierig, die einzelnen Teile so festzulegen oder zu fixieren, daß sie sich beim Löten oder der weiteren Bearbeitung nicht verschieben können.

Die DE-OS 32 27 692 beschreibt ein Punktschweißgerät der genannten Art. Dort sind die zu schweißenden Teile auf einem Modell gehalten und durch Andrückteile festgelegt sowie mit einem Pol der Schweißstromquelle verbunden. Der andere Pol der Schweißstromquelle liegt an einer Elektrode an, die an die Schweißstelle herangeführt wird. Der Lichtbogen brennt zwischen dieser Elektrode und der Verbindungsstelle. Hier ergeben sich Schwierigkeiten für das Abheben der Schweißelektrode, damit dieselbe nicht in die Schweißverbindung eingebunden wird. Außerdem ist ein Schweißen von Teilen in freier Ausrichtung nicht möglich.

Die DE-OS 3 327 882 beschreibt ein Schweißgerät für eine Widerstandsdruckschweißung. Der Schweißstrom fließt zwischen den Backen einer Schweißzange. Die Backen werden auf die zu schweißenden Teile gepreßt. Der Anwendungsbereich dieses Gerätes ist sehr eingeschränkt. Infolge des vergleichsweise hohen Schweißstromes ist das Schweißen von empfindlichen und feinen Zahnprothesenteilen nicht möglich, da dieselbe wegschmelzen würden.

Die GB-PS 1 281 414 beschreibt ein Lichtbogenschweißgerät, bei dem ein Lichtbogen zwischen zwei Elektroden einer Sonde brennt. Dieses Gerät ist nur dann anwendbar, wenn die zu schweißenden Teile zwischen die Elektroden gebracht werden können, was nur unter eingeschränkten räumlichen Bedingungen möglich ist.

Aufgabe der Erfindung ist die gegenseitige Fixierung von Bauteilen in der Dentaltechnik, insbesondere von Zahnprothesenteilen aus Edelstahl und Edelmetallegierungen in freier Ausrichtung.

Diese Aufgabe wird durch das Punktschweißgerät nach Anspruch 1 gelöst.

Die Erfindung unterscheidet sich insofern vom Stand der Technik, als die Schweißverbindung nicht zwischen zwei Elektroden bzw. einer Schweißunterlage und einer Elektrode unter Druck erfolgt, sondern durch einen sich zwischen den zu schweißenden Teilen im Annäherungs- oder punktförmigen Berührungsbereich ausbildenden Lichtbogen. Die punktförmigen Berührungsbereiche verdampfen, so daß sich ein Lichtbogen ausbildet. Es erfolgt eine Werkstoffaufschmelzung und durch Erstarrung in spitzenförmigen und fadenförmigen Brücken eine Fixierung der Teile gegeneinander, so daß anschließende Lötarbeiten möglich sind. Die Teile können frei zusammengeführt werden. Man kann eine Drahtspitze unmittelbar an eine Platte anschweißen. Die Schweißung erfolgt unmittelbar bei der gegenseitigen Annäherung bzw. Berührung der Teile. Die Niederspannungs-Gleichrichterschaltung stellt eine nach den Sicherheitsvorschriften zulässige Gleichspannung bis zu etwa 65 Volt bereit.

Zur Auslösung der Entladung und damit des Lichtbogens ist vorgesehen, daß in den Entladestromkreis der Kondensatoranordnung ein Schaltelement eingefügt ist. Das Schaltelement kann fußbetätigt sein. Das Schaltelement selbst umfaßt einen elektronischen Schalter, insbesondere einen Thyristor, der zur Schaltung hoher Schweißströme geeignet ist. Ein solches Schaltelement ermöglicht es, die zu verschweißenden Teile zunächst genau aufeinander auszurichten und dann den Schweißimpuls auszulösen.

Die Intensität des Schweißimpulses läßt sich dadurch an die jeweilige Verwendung anpassen, daß mehrere Kondensatoren unterschiedlicher Kapazität parallel zueinander vorgesehen sind und jeweils über eine Wählschaltung ein Kondensator in Ladebereitschaft gebracht werden kann. Eine solche stufenweise Einstellung ist leicht reproduzierbar und reicht in der Praxis aus. Sie ist einer stufenlosen Einstellung vorzuziehen.

Zur Beeinflussung der Dauer des Schweißimpulses ist vorgesehen daß der spannungführende Kondensatorpol unter Zwischenschaltung von Induktivitäten oder Widerstanden mit mehreren Anschlußstellen verbunden ist. Man erreicht leicht Impulsdauern von 1 bis 10 ms. Je kleiner der Querschnitt der zu verschweißenden Teile, insbesondere je dünner der jeweilige Draht ist, um so kleiner muß der Schweißimpuls sein, damit der Werkstoff in dem elektrischen Lichtbogen nicht wegbrennt. Die Anschlußstellen sind durch Anschlußbuchsen verwirklicht. Zwei oder drei Zeitdauern des Schweißimpulses sind in der Praxis in Anpassung an die auftretenden Schweißanforderungen ausreichend.

Die Schweißbereitschaft nach Beendigung des Aufladevorgangs wird dadurch angezeigt, daß der spannungführende Kondensatorpol mit einer Zenerdiode verbunden ist, zu der in Reihe eine Leuchtdiode geschaltet ist.

Eine Kondensatorentladung ist dadurch möglich, daß der spannungführende Kondensatorpol über einen Entladewiderstand mit einem Entladetaster verbunden ist.

Eine Ausführungsform der Erfindung wird im folgenden unter Bezugnahme auf das anliegende Schaltbild erläutert.

Das Schaltbild zeigt einen Netzteil 1, einen Gleichrichterteil 2 und einen Speicherteil 3 zur Speicherung der Ladung für den Schweißimpuls. An den Speicherteil 3 sind Verbindungsleitungen 4 und 5 angeschlossen, an denen jeweils eine Schweißzange 6, 7 sitzt. Jede Schweißzange 6, 7 ermöglicht die Halterung und den elektrischen Anschluß eines Dentalteiles 8 oder 9 aus elektrisch leitendem Werkstoff. In dem dargestellten Beispiel handelt es sich um Drähte 8 oder 9. Es kann sich genau so gut um Zahnprothesen, Halteplatten oder dergleichen handeln. Die Dentalteile 8 und 9 können durch das Punktschweißgerät nach der Erfindung miteinander verschweißt werden, was weiter unten erläutert wird.

Das Netzteil 1 umfaßt eine Sicherung 10, einen Schalter 11 und Kontrollampen 12, 13, 14. Die Kontrollampe 12 zeigt den Einschaltzustand des Schalters 11 an. Die Kontrollampe 13 ist über eine Relaiskontaktzunge 15 und die Kontrollampe 14 über eine Kontaktzunge 16 einschaltbar, was noch im einzelnen erläutert wird. Das Netzteil 1 umfaßt auch die Primärspule 17 eines Transformators 18, der zwei hintereinander geschaltete Sekundärspulen 19 und 20 hat, die zu dem Gleichrichterteil 2 gehören.

In der Verbindungsleitung der Sekundärspulen 19 und 20 befinden sich verschiedene Schalter, nämlich ein nichtrastender Taster 21, ein rastender Dauerfunktionstaster 22 und eine Relaiskontaktzunge 23. Die Sekundärspulen 19 und 20 geben jeweils eine Wechselspannung von 12 V ab. Diese Wechselspannung wird in einem Gleichrichterschalter 24 gleichgerichtet, so daß man eine gepulste Gleichspannung von 24 V erhält. Der positive Pol der Gleichrichterschaltung 24 ist mit Masse 27 verbunden.

Der Speicherteil 3 umfaßt als Ladungsspeicher mehrere Kondensatoren 25 und 26, die unterschiedliche Kapazität haben und somit für Schweißimpulse unterschiedlicher Größe und Intensität Verwendung finden. Die beiden Kondensatoren 26 sind parallel geschaltet, so daß die doppelte Kapazität zur Verfügung steht. Jeweils der positive Kondensatorpol ist mit einem Pol einer zweipoligen Anschlußbuchse 28 bzw. 29 verbunden. Der jeweils andere Pol dieser Anschlußbuchse ist mit Masse 27 verbunden. Normalerweise ist also die Verbindung zwischen dem positiven Kondensatorpol und Masse 27 offen. Die negativen Kondensatorpole sind zusammengeführt und liegen unter Zwischenschaltung von Induktivitäten 30, 31 an Anschlußbuchsen 32, 33, 34 an. Die Induktivitäten 30 und 31 dienen zur Änderung der Dauer eines Schweißimpulses.

Die Verbindungsleitungen 4 und 5 sind jeweils mit zweipoligen Steckern 36 bzw. 37 verbunden. Der Stecker 36 enthält eine interne Brücke 38, die die beiden Pole des Steckers überbrückt. Wenn also der Stecker 36 in eine Anschlußbuchse 28 oder 29 eingesteckt wird, so werden dadurch die Pole der Anschlußbuchse 28 oder 29 miteinander verbunden, so daß der an die jeweilige Anschlußbuchse angeschlossene Kondensator 25 bzw. 26 mit Masse 27 verbunden ist. Der Stecker 36 ermöglicht die Auswahl eines Kondensators 25 oder 26 und damit der Leistung des jeweiligen Schweißimpulses. Der Stecker 36 schließt den Ladestromkreis für den betreffenden Kondensator, so daß nur der betreffende Kondensator aufgeladen wird. Der Stecker 37 wird in eine der Anschlußbuchsen 32, 33, 34 eingesteckt und legt die Schweißdauer fest, da der entsprechende Schweißstrom über die jeweils zwischengeschaltete Induktivität 30 oder 31 bzw. Drosselspule fließen muß.

Es ist ein Schaltelement 44 vorhanden, das einen elektronischen Schalter umfaßt, z.B. einen Thyristor, der zur Schaltung des hohen Schweißstromes geeignet ist. Das Schaltelement 44 kann fußbetätigt sein. Dadurch ist es möglich den Schweißimpuls dann auszulösen, wenn die zu schweißenden Teile genau ausgerichtet sind.

Der Ladestrom der Gleichrichterschaltung 24 fließt über einen Vorwiderstand 35 und auch durch ein Relais 39, das die beiden Relaiskontaktzungen 15 und 23 betätigt.

Ferner sind die negativen Kondensatorpole mit einer Zenerdiode 40 verbunden, an die eine Leuchtdiode 41 angeschlossen ist.

Schließlich ist ein Entladewiderstand 42 und ein Entladetaster 43 vorgesehen.

Die Sekundärspulen 19 und 20 stellen jeweils eine Spannung von 12 V bereit, die Gleichrichterschaltung 24 stellt eine gepulste 24 V-Gleichspannung bereit. Infolgedessen lädt sich der jeweilige Kondensator unter Berücksichtigung der Effektivwerte auf eine Spannung von ca. 36 V auf. Diese Spannung bewirkt den Durchbruch der Zenerdiode 40, so daß die Leuchtdiode 41 die Beendigung des Ladevorgangs anzeigt.

Die Funktion des Punktschweißgeräts ist folgende. Der Schalter 11 schaltet die Netzspannung ein. Die Betriebsbereitschaft des Geräts wird durch die Kontrollampe 12 angezeigt. Als nächstes muß durch Einstecken des Steckers 36 die jeweilige Leistung des Schweißimpulses und durch den Stecker 37 die Dauer das Schweißimpulses ausgewählt werden. Die Schweißzangen 6 und 7 sind jeweils mit leitenden Dentalteilen 8 und 9 verbunden, die miteinander verschweißt werden sollen. Bei dünnen Drähten muß die Leistung des Schweißimpulses möglichst klein sein, damit der Draht im Lichtbogen nicht wegbrennt.

Es kann ein einmaliger Schweißimpuls erzeugt werden. Hierzu wird der nichtrastende Taster 21 betätigt, so daß ein Ladestrom fließt. Dieser Ladestrom erregt das Relais 39, das die Relaiskontaktzungen 15 und 23 anzieht. Die Relaiskontaktzunge 15 schließt den Stromkreis für die Kontrollampe 13, die den Ladevorgang anzeigt. Die Relaiskontaktzunge 23 ist eine Selbsthaltekontaktzunge für den nichtrastenden Taster 21. Der jeweils angeschaltete Kondensator 25 oder 26 wird aufgeladen. Bei Erreichen der Ladespannung zündet die Zenerdiode 40, so daß die Leuchtdiode 41 die Beendigung des Ladevorgangs anzeigt. Jetzt kann die Schweißung erfolgen, indem die Schweißzangen 6 und 7 mit den Dentalteilen 8 und 9 aufeinander zubewegt werden. Die Dentalteile 8 und 9 werden an der jeweils gewünschten Schweißstelle miteinander zur Berührung gebracht, so daß der Entladestrom des Kondensators einen Lichtbogen zündet und das Material in der Schweißstelle aufschmilzt. Hierdurch erfolgt eine stoffschlüssige Schweißverbindung. Der Entladestrom kann auch durch die Auslösetaste 44 geschaltet werden, nachdem zuvor die zu verschweißenden Teile aufeinander ausgerichtet sind.

Der Kondensator 25 hat z.B. eine Kapazität von 7000 µF, der Kondensator 26 von 10000 µF. Die Induktivitäten oder Drosselspulen 30 und 31 haben jeweils etwa 30 µH. Damit lassen sich maximale Schweißströme bis zu 340 A und Impulsdauern zwischen 1 und 10 ms realisieren. Der Schweißimpuls kann so dem jeweiligen Anwendungsfall, insbesondere dem zu verschweißenden Material angepaßt werden.

Durch die Entladung des Kondensators sinkt die Spannung am Relais 39 unter die Anzugspannung ab, so daß damit auch die Relaiskontaktzungen 15 und 23 abfallen. Nachdem der Kondensator entladen ist, kann ein neuer Schweißvorgang durch Betätigung des Tasters 21 ausgelöst werden.

Eine Dauerfolge von Schweißimpulsen kann durch Betätigung des rastenden Dauerfunktionstasters 22 bereitgestellt werden. Gemeinsam mit dem Dauerfunktionstaster 22 wird auch die Kontaktzunge 16 geschaltet, so daß die Kontrollampe 14 die Dauerschweißfunktion anzeigt. Nach Eindrücken des Dauerfunktionstasters 22 fließt der Ladestrom in der beschriebenen Weise. Die Beendigung des Ladevorgangs wird ebenfalls durch die Leuchtdiode 41 angezeigt. Es kann jetzt eine Schweißung erfolgen. Jeweils im Anschluß an diese Schweißung fließt wieder ein Ladestrom. Es können daher fortgesetzt Schweißungen durchgeführt werden, sobald der Ladezustand erreicht und durch die Leuchtdiode 41 angezeigt ist.

Wenn der Kondensator geladen ist und trotzdem keine Schweißung durchgeführt werden soll, so kann der Kondensator durch Betätigung der Entladetaste 43 über den Entladewiderstand 42 entladen werden.

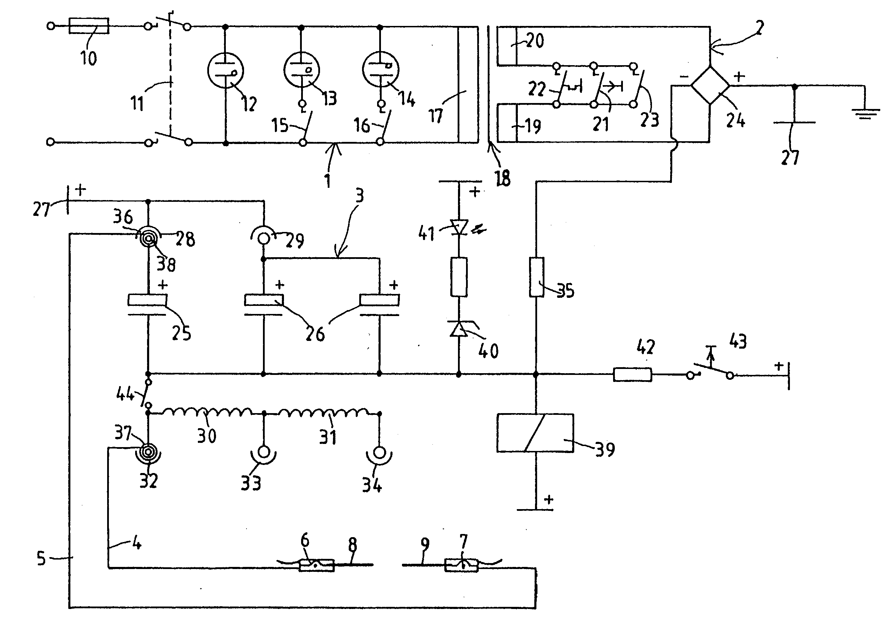

## Patentansprüche

1. Punktschweißgerät für die Dentaltechnik, das eine Niederspannungs-Gleichrichterschaltung und eine Kondensatoranordnung enthält, die einen Strom für einen Lichtbogen liefert, dadurch gekennzeichnet, daß die Pole der Kondensatoranordnung an Anschlußbuchsen angeschlossen sind und daß Anschlußbuchsen verschiedener Polarität über je einen Leiter mit je einer frei bewegbaren Schweißzange (6, 7) verbunden sind, wobei jede Schweißzange die Halterung und den elektrischen Anschluss jeweils eines der zu verschweißenden Teile, zwischen denen der Lichtbogen gezündet wird, ermöglicht.

2. Punktschweißgerät nach Anspruch 1, dadurch gekennzeichnet, daß in den Entladestromkreis der Kondensatoranordnung ein Schaltelement (44) eingefügt ist.

3. Punktschweißgerät nach Anspruch 1 oder 2, dadurch gekennzeichnet, daß mehrere Kondensatoren (25, 26) unterschiedlicher Kapazität parallel zueinander vorgesehen sind und jeweils über eine Wählschaltung ein Kondensator in Ladebereitschaft gebracht werden kann.

4. Punktschweißgerät nach einem der Ansprüche 1 bis 3, dadurch gekennzeichnet, daß der spannungführende Kondensatorpol unter Zwischenschaltung von Induktivitäten (30, 31) oder Widerständen mit mehreren Anschlußstellen (32, 33, 34) verbunden ist.

5. Punktschweißgerät nach einem der Ansprüche 1 bis 4, dadurch gekennzeichnet, daß der spannungführende Kondensatorpol mit einer Zenerdiode (40) verbunden ist, zu der in Reihe eine Leuchtdiode (41) geschaltet ist.

6. Punktschweißgerät nach einem der Ansprüche 1 bis 5, dadurch gekennzeichnet, daß der spannungführende Kondensatorpol über einen Entladewiderstand (42) mit einem Entladetaster (43) verbunden ist.

## Claims

1. Spot-welding apparatus for dentistry, which contains a low-voltage rectifier circuit and a capacitor arrangement, which supplies a current for an arc, characterized in that the poles of the capacitor arrangement are connected to sockets and that sockets of different polarity are connectec by way of respective leads each to a freely movable welding tong (6, 7), each of the welding tongs enabling the holding and electrical connection of a respective one of the two parts to be welded, between which the arc is ignited.

2. Spot-welding apparatus according to Claim 1, characterised in that a switching element (44) is incorporated in the discharge circuit of the capacitor arrangement.

3. Spot-welding apparatus according to Claim 1 or 2, characterized in that several capacitors (25, 26) of different capacitance are provided parallel to each other and one capacitor can be brought into a state of readiness for charging by way of a respective selection circuit.

4. Spot-welding apparatus according to one of Claims 1 to 3, characterized in that the live capacitor pole is connected to several connecting points (32, 33, 34) with the interposition of inductive resistors (30, 31) or resistors.

5. Spot-welding apparatus according to one of Claims 1 to 4, characterized in that the live capacitor pole is connected to a zener diode (40), with which a light-emitting diode (41) is connected in series.

6. Spot-welding apparatus according to one of Claims 1 to 5, characterized in that the live capacitor pole is connected to a discharge push-button switch (43) by way of a discharge resistor (42).

## Revendications

1. Appareil de soudage par points, pour la technique dentaire, qui comporte un circuit redresseur de courant à basse tension et un agencement de condensateurs qui fournit un courant pour un arc électrique, caractérisé en ce que les pôles de l'agencement de condensateurs sont connectés à des douilles de raccordement et en ce que des douilles de raccordement d'une polarité différente sont chacune reliées par un conducteur à une pince de soudage (6, 7), chaque pince de soudage etant déplacée librement et rendant possible le maintien et le raccordement électrique chaque fois d'une des pièces à souder entre lesquelles l'arc électrique est amorcé.

2. Appareil de soudage par points suivant la revendication 1, caractérisé en ce qu'un élément de commutation (44) est inséré dans le circuit de décharge de l'agencement de condensateurs.

3. Appareil de soudage par point suivant l'une des revendications 1 et 2, caractérisé en ce que plusieurs condensateurs (25, 26) de capacité différente sont prévus en parallèle l'un à l'autre et en ce qu'un condensateur peut être mis en disponibilité de charge respectivement par un circuit sélectif.

4. Appareil de soudage par points suivant l'une des revendications 1 à 3, caractérisé en ce que le pôle de condensateur sous tension est relié à plusieurs prises de courant (32, 33, 34) avec intercalation d'inductances (30, 31) ou de résistances.

5. Appareil de soudage par points suivant l'une des revendications 1 à 4, caractérisé en ce que le pôle de condensateur sous tension est relié à une diode de Zener (40) par rapport à laquelle est montée en série une diode électroluminescente (41).

6. Appareil de soudage par points suivant l'une des revendications 1 à 5, caractérisé en ce que le pôle de condensateur sous tension est relié à un manipulateur de décharge (43) à travers une résistance de décharge (42).
